# EUROPEAN PATENT SPECIFICATION

(11) **EP 3 616 798 B1**
(45) Date of publication and mention of the grant of the patent: **06.03.2024**
(21) Application number: 18791474.2
(22) Date of filing: 24.04.2018
(51) Int. Cl.: B05C 5/00, B05B 12/00, B05B 15/00, B05C 11/10, B05B 12/08, G06F 13/38

(54) **CABLE UNIT, AND LIQUID MATERIAL SUPPLY DEVICE AND APPLICATION DEVICE IN WHICH SAID CABLE UNIT IS USED**
KABELEINHEIT UND FLÜSSIGKEITSZUFUHRVORRICHTUNG UND ANWENDUNGSVORRICHTUNG, IN DER DIESE KABELEINHEIT VERWENDET WIRD
UNITÉ DE CÂBLE, DISPOSITIF D'ALIMENTATION EN MATÉRIAU LIQUIDE ET DISPOSITIF D'APPLICATION DANS LESQUELS LADITE UNITÉ DE CÂBLE EST UTILISÉE

(30) Priority: 28.04.2017 JP 2017089136
(43) Date of publication of application: 04.03.2020
(73) Proprietor: Musashi Engineering, Inc., Mitaka-shi, Tokyo 181-0011 (JP)
(72) Inventor: IKUSHIMA, Kazumasa, Mitaka-shi Tokyo 181-0011 (JP)
(74) Representative: TBK
(86) International application number: PCT/JP2018/016641
(87) International publication number: WO 2018/199103

(56) References cited:
- EP-A1- 3 078 427
- EP-A2- 1 084 757
- WO-A1-91/02598
- WO-A1-2008/022708
- WO-A1-2015/083722
- JP-A- 2001 245 028
- JP-A- 2003 033 350
- JP-A- 2003 275 647
- JP-A- 2006 261 228
- JP-A- 2013 095 116
- US-A1- 2015 347 348

## Description

### Technical Field

The present invention relates to a cable unit that connects a discharge head configured to supply a liquid material to a workpiece with a robot on which the discharge head is mounded, and a liquid material supply device and an application device including the cable unit.

### Background Art

In order to supply (including applying, filling with, coating with, drawing with, injecting, dripping, and spraying, the same hereinafter) a liquid material to a desired position on a workpiece (work target, the same hereinafter), an application device has been known which is a combination of a discharge head configured to supply a desired amount of liquid material, and a robot mounting the discharge head and configured to cause the discharge head to supply the liquid material to a desired position on a workpiece.

The discharge head is constituted by a dispenser, for example. Methods of discharging liquid materials by a dispenser include air-type, screw-type, tubing-type, plunger-type, and jet-type methods and the like. In general, a discharge method is often selected depending on the type of a liquid material to be discharged. In addition to a discharge method of a liquid material, a dispenser to be used is also sometimes selected depending on work takt time, discharge repetition accuracy, or the like. Meanwhile, a suitable robot (including a robot category such as a scalar robot or an XYZ robot, a size, and a movable range, for example) is selected depending on the size of a workpiece, details of work (application, filling, drawing, or the like), locating accuracy, or the like.

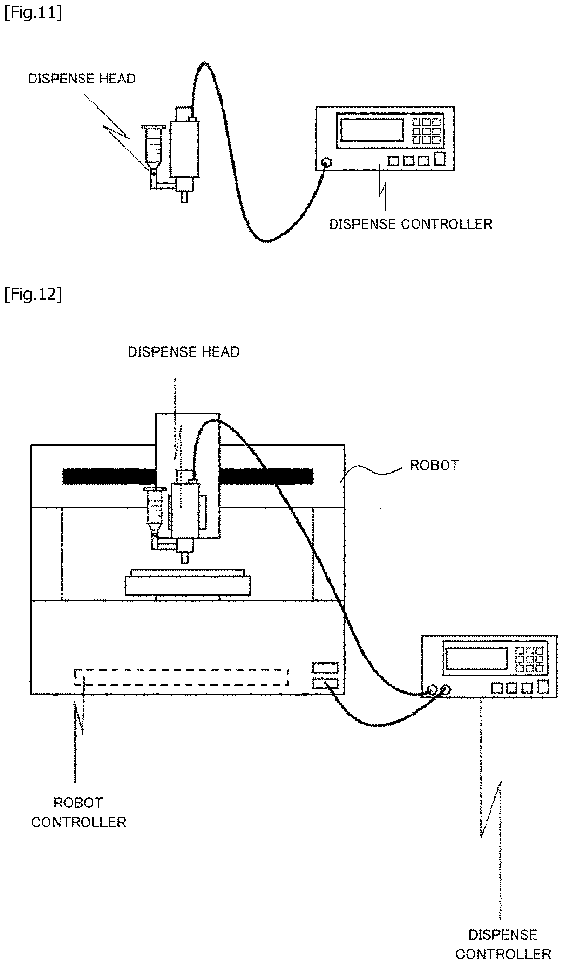

As shown in Fig. 11, a dispenser includes a dispense head that discharges a liquid material and a dispense controller that controls an operation of the dispense head.

When supplying a liquid material to a workpiece, as shown in Fig. 12, it is necessary to mount the dispense head on a robot head of a robot and to electrically connect the dispense controller that controls a dispenser's operation to discharge the liquid material with a robot controller that controls movements of the dispense head. The robot controller moves the dispense head to a predetermined liquid material supply position and, when the dispense head movement is complete, transmits a signal of supply start command to the dispense controller. When the dispense controller receives this signal, the dispense controller causes the dispense head to supply the liquid material based on a program set in the dispense controller.

Such devices for supplying a liquid material with a combination of a dispenser and a robot are known in Patent Documents 1 to 3, for example. That is, Patent Document 1 illustrates a configuration where a discharge controller is physically separated from a driving controller (see Fig. 17 of Patent Document 1). Patent Document 2 illustrates a work robot and a separate dispense controller (see Fig. 1 of Patent Document 2). Further, patent Document 3 illustrates a configuration where a robot controller (first control unit) and a dispense controller (second control unit) are separate control units and electrically connected with each other (see Figs. 1 and 2 of Patent Document 3).

### Prior Art List

### Patent Document

Patent Document 1: Japanese Patent Laid-Open Publication JP 2013-184116
Patent Document 2: International Publication WO 2007/083585
Patent Document 3: International Publication WO 2015/083722
Patent Document 4: EP 1 084 757 A2
Patent Document 5: WO 2008/022708 A1
Patent Document 6: WO 91/02598 A1
Patent Document 7: US 2015/347348 A1
Patent Document 8: EP 3 078 427 A1
EP 1 084 757 A2 is regarded as closest prior art and teaches the features of the preamble of claim 1.
WO 2008/022708 A1 discloses a hot glue application system using a tube in which a writeable data carrier is embedded,
WO 91/02598 A1 discloses a liquid applying system for painting. The system has a spray gun, a controller and a wire connectable to the spray gun and the controller.
US 2015/347348 A1 discloses a system having an embedded system controller couples to an electronic component by a cable. The cable connector comprises a standardized connector and a second microcontroller that is embedded in the cable connector.
EP 3 078 427 A1 discloses a liquid material application device having a robot with a discharge head and a stage on which a workpiece is placed. The discharge head can be moved relatively to the workpiece. The robot has within its bench a robot controller. Further, externally from the robot, a dispense controller is provided. The robot controller is connected with the dispense controller by a first cable. The dispense controller is connected with the discharge head by a second cable.

### Summary of the Invention

### Problems to be Solved by the Invention

In order to secure a large work space, there is a need for saving space for a device.

An object of the present invention is to provide a cable unit that can achieve space saving for a device, and a liquid material supply device and an application device including the cable unit.

### Means for Solving the Problems

The inventor has examined ways in which a discharge head and a dispense controller are integrally constituted for eliminating the box-shaped dispense controller. However, there would be problems that the dispense controller might fail due to leakage of a liquid material filling the discharge head into the dispense controller, that the heavier discharge head requires larger XYZ-driving devices, and that an existing discharge head has to be replaced. After exercising ingenuity earnestly, the inventor has come to findings of arranging a dispense controller at a connector portion of a cable, and devised the present invention. That is, the present invention is configured with the following technical means.
The above object is solved by a cable unit having the features of claim 1. Further developments are stated in the dependent claims.

A cable unit according to the present invention is a cable unit that detachably and electrically connects a discharge head configured to discharge a liquid material with a relative-moving robot configured to carry out relative movement between the discharge head and a workpiece and has a dispense controller configured to control a discharge operation of the discharge head. In the above-mentioned cable unit, the cable unit has a cable portion and a connector portion, and the dispense controller is arranged at the connector portion.

In the above-mentioned cable unit, the cable portion may have a communication cable for communicating with the dispense controller, and a power cable for supplying power to the discharge head.

In the above-mentioned cable unit, the connector portion is constituted by a robot-side connector portion and a discharge-head-side connector portion, and the dispense controller may be arranged at the robot-side connector portion.

In the above-mentioned cable unit, the connector portion may have a first connector portion linked to the cable portion and a second connector portion at which the dispense controller is arranged, and the first connector portion and the second connector portion may be able to be attached to and detached from each other.

In the above-mentioned cable unit, the first connector portion may have a controller-connecting terminal to connect with the second connector portion, and the second connector portion may have a robot-connecting terminal to connect with the relative-moving robot and a connector-portion-connecting terminal to connect with the first connector portion.

In the above-mentioned cable unit, the first connector portion may have a controller-connecting terminal to connect with the second connector portion, and a robot-connecting terminal to connect with the relative-moving robot, and the second connector portion may have a connector-portion-connecting terminal to connect with the first connector portion. Further, the controller-connecting terminal may be arranged on a surface of a side at which the cable portion of the first connector portion is connected, and the robot-connecting terminal may be arranged on a surface of a side opposite to the controller-connecting terminal of the first connector portion.

In the above-mentioned cable unit, the cable unit may have no input device.

In the above-mentioned cable unit, the cable unit may have no display device.

In the above-mentioned cable unit, the cable unit may have no power source device.

A liquid material supply device according to the present invention includes the above-mentioned cable unit, and a discharge head configured to supply a liquid material.

An application device according to the present invention includes the above-mentioned liquid material supply device, and a relative-moving robot configured to carry out relative movement between the discharge head and a workpiece.

In the above-mentioned application device, the relative-moving robot may include a robot head on which the discharge head is mounted, a robot head driving device configured to move the robot head relative to the workpiece, and a robot controller configured to control an operation of the robot head, the discharge head may include a discharging member of which fore end is disposed in a liquid chamber, and a discharge driving device configured to drive the discharging member, and the dispense controller may be configured to control an operation of the discharge driving device.

In the above-mentioned application device, the relative-moving robot may include an input interface configured to communicate with an external computer, and the robot controller may have a cooperation function that enables communication between the external computer and the dispense controller.

In the above-mentioned application device, the application device may be of desktop type.

### Advantageous Effect of the Invention

According to the present invention, a dispense controller is arranged at a cable unit, thereby eliminating the need to separately and individually install a dispense controller and thus allowing the space saving for a device.

### Brief Description of the Drawings

[Fig. 1] Fig. 1 is a schematic view illustrating a dispense head and a cable unit according to a first embodiment.
[Fig. 2] Fig. 2 is a schematic view illustrating an application device according to the first embodiment.
[Fig. 3] Fig. 3 is a block configuration diagram of the application device according to the first embodiment.
[Fig. 4] Fig. 4 is a (first) schematic view of a cable unit according to a second embodiment.
[Fig. 5] Fig. 5 is a (second) schematic view of the cable unit according to the second embodiment.
[Fig. 6] Fig. 6 is a schematic view illustrating an application device according to a third embodiment.
[Fig. 7] Fig. 7 is a schematic view illustrating a variation of the application device according to the third embodiment.
[Fig. 8] Fig. 8 is a (first) schematic view of a cable unit according to a fourth embodiment.
[Fig. 9] Fig. 9 is a (second) schematic view of the cable unit according to the fourth embodiment.
[Fig. 10] (A) is a view of the cable unit as viewed from the A-direction in Fig. 8, and (B) is a view of the cable unit as viewed from the B-direction in Fig. 9.
[Fig. 11] Fig. 11 is a schematic view illustrating a conventional dispenser.
[Fig. 12] Fig. 12 is a schematic view illustrating a conventional application device.

### Mode for Carrying out the Invention

Examples of mode for carrying out the present invention will be described below with reference to the drawings. Hereinafter, embodiment examples where a discharge head is a screw-type dispense head that discharges a liquid material by rotation of a screw will be described.

### <<First Embodiment>>

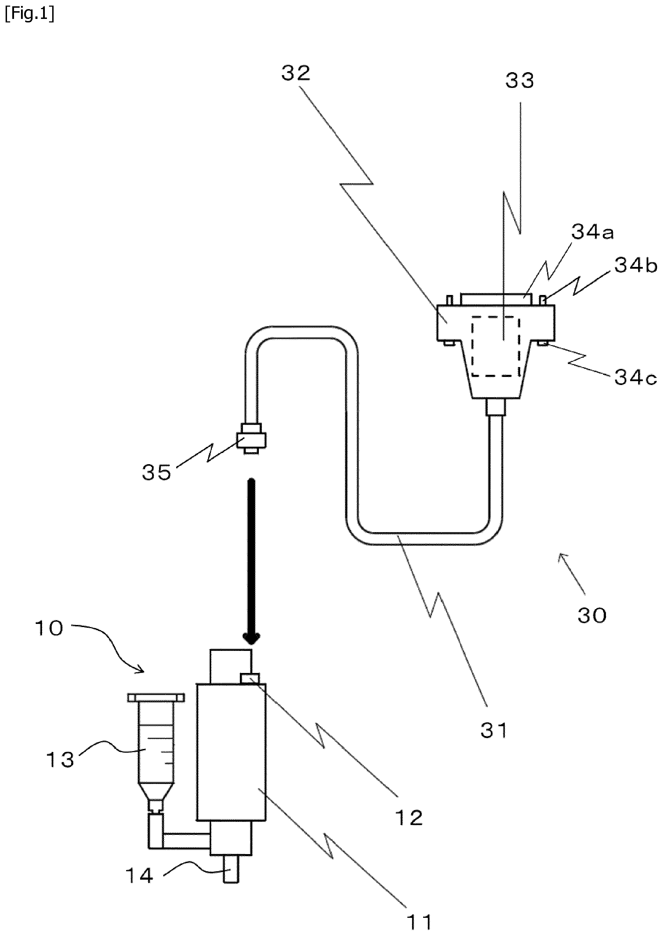

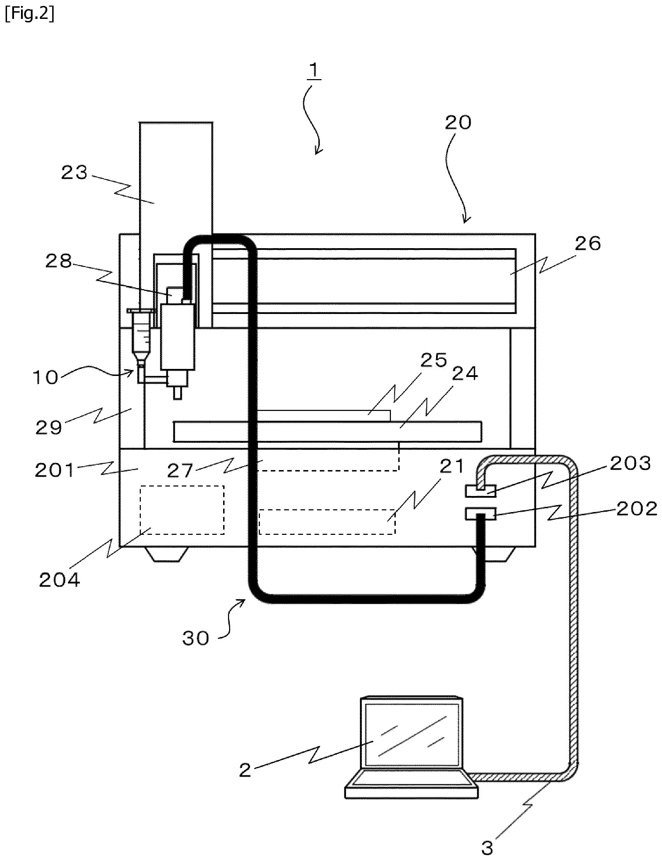

Fig. 1 is a schematic view illustrating a dispenser and a cable unit according to a first embodiment. Fig. 2 is a schematic view illustrating an application device according to the first embodiment. As shown in Fig. 2, the application device 1 according to the first embodiment includes a discharge head 10 configured to supply a liquid material, a relative-moving robot 20 on which the discharge head 10 is mounted, and a cable unit 30 that electrically connects the discharge head 10 with the relative-moving robot 20.

As shown in Fig. 1, the discharge head 10 has a main body 11, a cable-connecting terminal 12, a syringe 13, and a nozzle 14. The discharge head 10 according to the present embodiment is of screw type capable of discharging a liquid material by rotation of a screw. The screw (not shown) disposed in a liquid chamber is detachably coupled to a discharge driving device 15 (not shown) in the main body 11. The discharge head 10 thus discharges a liquid material, flown from the syringe 13 into the liquid chamber, through a discharge port of the nozzle 14 by rotation of the screw. In the present embodiment, the discharge driving device 15 is configured with a rotating actuator (e.g., a mechanism using a motor). However, this configuration is not a limitation, and when the discharge method is of jet type, for example, the discharge driving device 15 is configured with a reciprocating actuator (e.g., a configuration where a piston behind a plunger is driven by air or a spring, or a configuration where a plunger is reciprocated using an electromagnet).

The discharge head 10 can receive a control signal from a dispense controller 33 by connecting a discharge-head-side connector portion 35 of the cable unit 30 with the cable-connecting terminal 12 arranged on the main body 11.

The relative-moving robot 20, on which the discharge head 10 is mounted, moves the discharge head 10 along X-, Y-, and Z-directions to a desired position on a workpiece. The relative-moving robot 20 according to the present embodiment is a desktop XYZ-orthogonal robot and, as shown in Fig. 2, has on a table 201 a work table 24 that supports a workpiece 25 as an application target and an X-driving device 26, a Y-driving device 27, and a Z-driving device 28 configured to move the above-mentioned robot head 23 relative to the workpiece 25. A robot controller 21 that controls an operation of each of the above-mentioned driving devices (26, 27, 28), and a power source device 204 are arranged inside the table 201.

The robot controller 21 includes a computing device, a storage device, and an I/O port. This storage device stores a relative movement program for leading the relative-moving robot 20 into relative movement in accordance with an application pattern and a cooperation program. An application program is described by a designated-position movement command to move the XYZ-driving devices (26 to 28) to designated coordinates along a linear or curved path, and a relative movement command to relatively convey the discharge head 10 against the work table 24 (or the workpiece 25) in accordance with the application pattern at a predetermined relative movement speed. Additionally, the application program is described by a discharge start command to cause the discharge head 10 to start discharging a liquid material, a discharge amount control command to cause the discharge head 10 to discharge a discharge amount of liquid material per unit time, and a discharge stop command to cause the discharge head 10 to stop discharging the liquid material. The discharge amount per unit time for the liquid material is controlled by the number of rotations of the screw per unit time. The number of rotations of the screw per unit time is controlled by the number of rotations of the discharge driving device 15 that rotates the screw.

The cooperation program realizes a cooperation function that enables bidirectional communication between an input device 2 and the dispense controller 33. The cooperation program causes transmission of a program and a parameter, input from the input device 2, to the dispense controller 33, and transmission of an output signal from the dispense controller 33 to the input device 2.

As shown in Fig. 2, the relative-moving robot 20 includes two connecting terminals on the front surface of the table 201 that electrically connect with the robot controller 21. Specifically, the relative-moving robot 20 has a head-connecting terminal 202 for electrically connecting with the cable unit 30, and an input-device-connecting terminal 203 as an input interface for connecting with the input device 2. The input device 2 and the input-device-connecting terminal 203 are electrically connected with each other via a communication cable 3. Note that the head-connecting terminal 202 and the input-device-connecting terminal 203 may be arranged on the side surface or the back surface of the table 201.

As shown in Fig. 1, the cable unit 30 according to the present embodiment has a cable portion 31, a robot-side connector portion 32, and a discharge-head-side connector portion 35. The dispenser controller 33 is housed in the robot-side connector portion 32. This can reduce the weight of the discharge head 10, and reduce load on the X-driving device 26 and the Z-driving device 28 when they start and stop moving the discharge head 10. The cable portion 31 has a communication cable for enabling bidirectional communication with the dispense controller 33, and a power cable for supplying power to the discharge head 10. The cable portion 31 is not necessarily constituted as a physically single cable, and may be constituted by multiple cables connecting to a body of the robot-side connector portion 32.

The robot-side connector portion 32 has a robot-connecting terminal 34a, a pair of pins 34b projecting from the front side of the robot-side connector portion 32, and a pair of knobs 34c projecting from the back side of the robot-side connector portion 32.

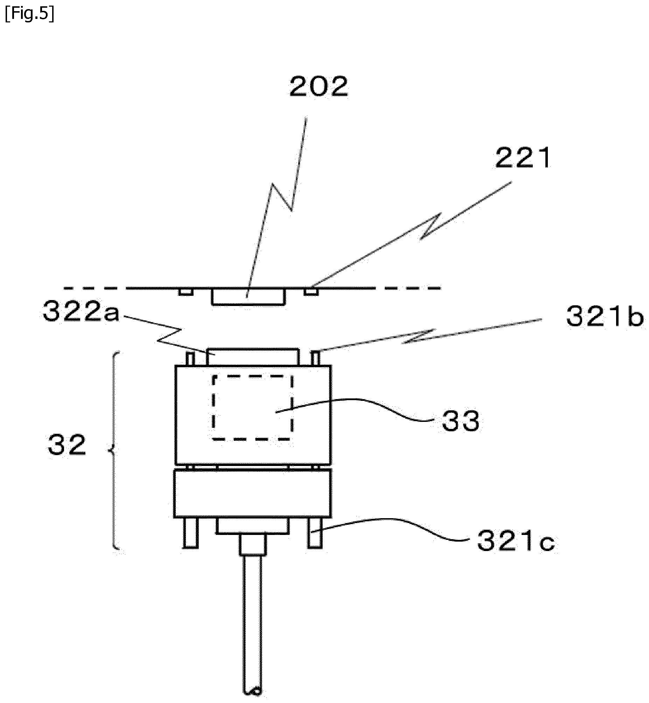

The relative-moving robot 20 has a pair of fasteners 221 with holes of which inner surfaces are threaded near the head-connecting terminal 202 (see Fig. 5 described later for details). By engaging the head-connecting terminal 202 with the robot-connecting terminal 34a and turning the pair of knobs 34c, the fore ends of the pair of pins 34b can be screwed into the threaded holes of the pair of fasteners 221. This enables detachable coupling between the relative-moving robot 20 and the robot-side connector portion 32 of the cable unit 30. Conversely, by turning the pair of knobs 34c to unscrew the fore ends of the pair of pins 34b, the robot-side connector portion 32 can be detached from the head-connecting terminal 202 of the relative-moving robot 20. Screw heads may be formed on the knobs 34c to enable attachment and detachment using a tool such as a driver.

The dispense controller 33 is preferably arranged at the connector portion (32, 35), and in particular, preferably housed in the robot-side connector portion 32 that connects with the relative-moving robot 20. The dispense controller 33 can be arranged at the discharge-head-side connector portion 35. However, it is possible to reduce the weight of the discharge head 10 by holding the dispense controller 33 in the robot-side connector portion 32 at the end opposite to the discharge-head-side connector portion 35, which is more preferable. This can reduce driving load on the X-driving device 26 and the Z-driving device 28.

In the present embodiment, a personal computer as the input device 2 can be connected with the input-device-connecting terminal 203. An operator can use the input device 2 to input a program and a parameter into the robot controller 21 and the dispense controller 33. Conventionally, input keys arranged at a box-shaped dispense controller have been used for performing an operation such as input to the dispense controller 33. In contrast, the size of the dispense controller 33 can be reduced by sharing the input device with the robot controller without any input device at the cable unit 30 such that the input device of the robot controller 21 is used for inputting to the dispense controller 33. Additionally, the size of the dispense controller 33 can be further reduced in terms of a display device by realizing a display for the dispense controller 33 with a display device of the robot controller 21 such as the above-mentioned personal computer without arranging another display device at the cable unit 30.

It should be noted that the input device 2 is not limited to a personal computer, and may be a handy device such as a teach pendant, for example.

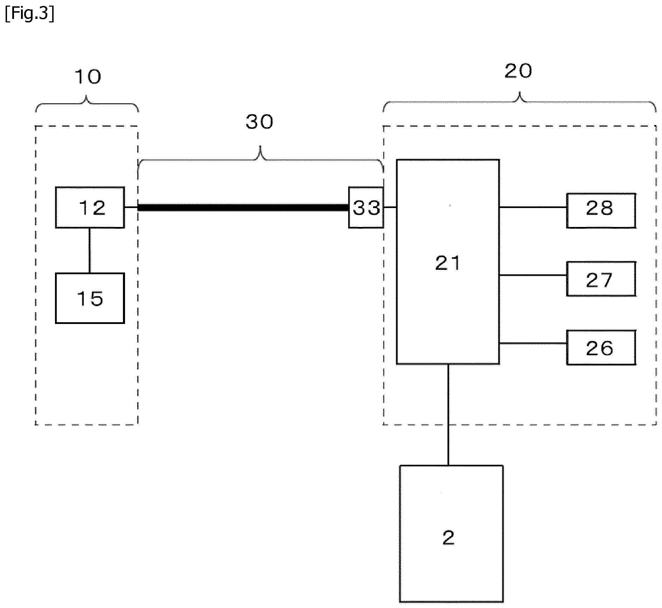

Fig. 3 is a block configuration diagram of the application device 1 according to the first embodiment.

The cable unit 30 electrically connects the discharge head 10 with the relative-moving robot 20, and supplies power to the discharge head 10. The power is supplied to the discharge head 10 by utilizing the power source device 204 included in the relative-moving robot 20 via the robot-connecting terminal 34a.

The dispense controller 33 buried in the robot-side connector portion 32 includes a computing device, a storage device, and an I/O port. In this storage device, a discharge control program is stored for controlling the discharge amount. The cable unit 30 including the dispense controller 33 has no dedicated power source device and no dedicated input key, and thus can be configured compactly. The power is also supplied to the dispense controller 33 by utilizing the power source device included in the relative-moving robot 20 via the robot-connecting terminal 34a. The size of the robot-side connector portion 32 is not particularly limited, but the width of the robot-side connector portion 32 is 9 cm or less and the thickness thereof is 3 cm or less, for example. The dispense controller 33 can be configured by disposing respective elements on a wiring substrate or can be configured with a one-chip microcomputer.

A discharge control amount D is described in the discharge control program. The discharge control amount D controls the number of rotations per unit time of the discharge driving device (rotating actuator) 15 that rotates the screw. The computing device of the dispense controller 33 executes the discharge control program upon reception of the discharge start command from the robot controller 21, and terminates the discharge control program upon reception of the discharge stop command. The dispense controller 33 transmits the discharge control amount D described in the discharge control program to the rotating actuator 15 and leads the rotating actuator 15 into rotation according to the discharge control amount D, thereby allowing the discharge head 10 to discharge the operator's desired discharge amount of liquid material per unit time.

As described above, the cable unit 30 according to the first embodiment is a cable unit that detachably and electrically connects the discharge head 10 configured to discharge a liquid material with the relative-moving robot 20 and has the dispense controller 33 configured to control a discharge operation of the discharge head 10. This can save space for the entire application apparatus 1 compared to the case where the dispense controller 33 is separately and individually installed.

Further, the discharge head 10 can be made operable without a box-shaped dispense controller only by a simple work of changing connection destinations of the cable-connecting terminal 12 and the head-connecting terminal 202 instead of altering the discharge head 10.

### <<Second Embodiment>>

A cable unit 30a according to a second embodiment of the present invention is configured in such a way that a robot-side connector portion 32 includes a first connector portion 321 and a second connector portion 322 that are detachably coupled to each other, which is different from the cable unit 30 according to the first embodiment. Hereinafter, differences from the first embodiment will be mainly described and common descriptions will be omitted.

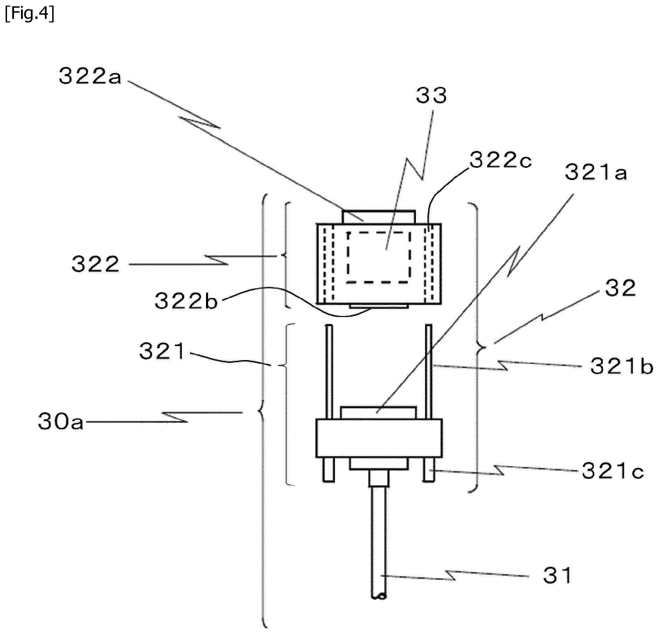

Figs. 4 and 5 are schematic views of the cable unit 30a according to the second embodiment. Fig. 4 shows a state where the second connector portion 322 is not connected with the first connector portion 321, and Fig. 5 shows a state where the second connector portion 322 is connected with the first connector portion 321. As shown in Figs. 4 and 5, the cable unit 30a has a cable portion 31, a robot-side connector portion 32, and a discharge-head-side connector portion 35. The robot-side connector portion 32 has the first connector portion 321 and the second connector portion 322. The cable portion 31 and the first connector portion 321 are integrally linked to each other, while the first connector portion 321 and the second connector portion 322 can be attached to and detached from each other by a connector coupling mechanism.

Specifically, as shown in Fig. 4, the second connector portion 322 has a robot-connecting terminal 322a to connect with the relative-moving robot 20, and a connector-portion-connecting terminal 322b to connect with the first connector portion 321. As shown in Fig. 4, the first connector portion 321 is linked to the cable portion 31 at one end, and has a controller-connecting terminal 321a to connect with the second connector portion 322 at the other end. Further, in the present embodiment, the first connector portion 321 has a pair of pins 321b, and the second connector portion 322 has a pair of pin holes 322c. From another point of view, the controller-connecting terminal 321a, the connector-portion-connecting terminal 322b, the pair of pins 321b, and the pair of pin holes 322c constitute the above-mentioned connector coupling mechanism.

When connecting the first connector portion 321 with the second connector portion 322, first, the pair of pins 321b of the first connector portion 321 are inserted through the pair of pin holes 322c of the second connector portion 322, and the connector-portion-connecting terminal 322b of the second connector portion 322 is engaged with the controller-connecting terminal 321a of the first connector portion 321. The pair of pins 321b of the first connector portion 321 are longer than the pair of pin holes 322c of the second connector portion 322, which causes the fore ends of the pair of pins 321b to project from the pair of pin holes 322c when the pair of pins 321b are inserted through the pair of pin holes 322c as shown in Fig. 5. These fore ends of the pair of pins 321b are threaded. As shown in Fig. 5, the relative-moving robot 20 has the pair of fasteners 221 with holes of which inner surfaces are threaded near the head-connecting terminal 202.

Thus, when connecting the relative-moving robot 20 with the cable unit 30a, the head-connecting terminal 202 is engaged with the robot-connecting terminal 322a in the state of connecting the first connector portion 321 with the second connector portion 322 as shown in Fig. 5, and the fore ends of the pair of pins 321b projecting from the pair of pin holes 322c can be screwed into the pair of fasteners 221 near the head-connecting terminal 202 of the relative-moving robot 20 by turning a pair of knobs 321c of the first connector portion 321. Conversely, when separating the second connector portion 322 from the first connector portion 321, first, the pair of knobs 321c of the first connector portion 321 are turned for detaching the robot-side connector portion 32 from the head-connecting terminal 202 of the relative-moving robot20. Then, as shown in Fig. 4, the second connector portion 322 can be detached from the first connector portion 321 by disengaging the controller-connecting terminal 321a of the first connector portion 321 from the connector-portion-connecting terminal 322b of the second connector portion 322 and extracting the pair of pins 321b of the first connector portion 321 from the pair of pin holes 322c of the second connector portion 322.

In the present embodiment, as shown in Fig. 4 or 5, the second connector portion 322 houses a dispense controller 33. The dispense controller 33 controls a discharge operation of the discharge head 10 as in the first embodiment.

As described above, in the cable unit 30a according to the present embodiment, the robot-side connector portion 32 is formed of the first connector portion 321 and the second connector portion 322. The second connector portion 322 houses the dispense controller 33, and can be attached to and detached from the first connector portion. This enables change of the discharge control program by replacing the second connector portion 322 without modifying the program in the dispense controller 33. That is, by replacing a second connector portion 322 housing a dispense controller 33 storing a program A with another second connector portion 322 housing a dispense controller 33 storing a program B, a discharge operation of the discharge head 10 based on the program A can be easily changed into a discharge operation based on the program B. In the case of cable breakage in the cable unit 30, the second connector portion 322 can be detached from the broken cable portion 31 and the first connector portion 321, and it is possible to replace only the cable portion 31 and the first connector portion 321, which are relatively inexpensive. In the case of failure of the dispense controller 33 due to effect of static electricity or the like, it is also possible to replace only the second connector portion 322.

### <<Third Embodiment>>

An application device 1a according to a third embodiment of the present invention is configured in such a way that a head-connecting terminal 202a to connect with the cable unit 30 is arranged at a robot head 23, which is different from the application device 1 according to the first embodiment. Hereinafter, differences from the first embodiment will be mainly described and common descriptions will be omitted.

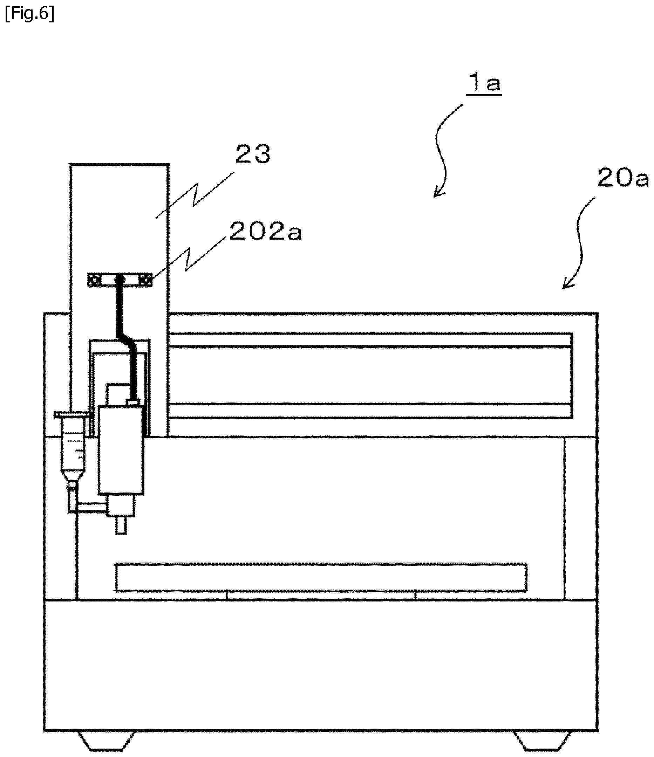

Fig. 6 is a front view illustrating the application device 1a according to the third embodiment. In the application device 1a according to the third embodiment, the head-connecting terminal 202a that connects with the cable unit 30 is arranged at the front side of the robot head 23 of a relative-moving robot 20a. This can shorten the cable portion 31 of the cable unit 30, and eliminate the bustle of the cable portion 31 that arises during movement of the robot head 23. An input-device-connecting terminal 203 is not shown in Fig. 6. Note that the connection with the input device 2 is not limited to wired communication, and a wireless module allowing the relative-moving robot 20a to wirelessly communicate with the input device 2 may constitute an input interface.

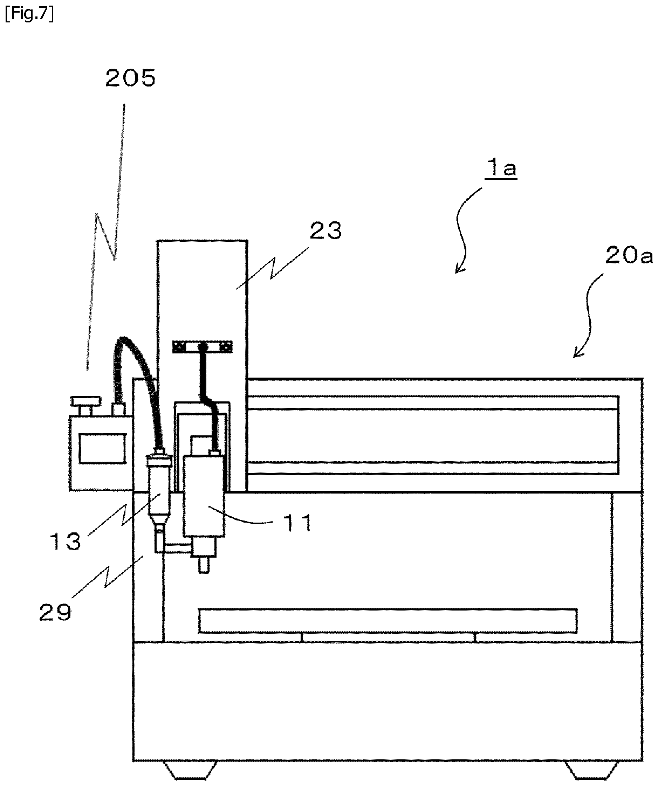

Additionally, as shown in Fig. 7, the application device 1a can have a configuration where a pressure-adjusting unit 205 including a regulator (pressure-reducing valve) is connected to the side surface of a post 29 of the relative-moving robot 20a. The pressure-adjusting unit 205 adjusts the pressure of air supplied from the outside to a desired pressure with the regulator, and supplies the adjusted air from the upper end of the syringe 13 into the syringe 13. In this manner, even when a liquid material stored in a reservoir is a material with a low fluidity such as a highly viscous material, the liquid can be smoothly delivered to the main body 11 of the discharge head 10 by applying backup pressure to the syringe 13.

Thus, in the application device 1a according to the third embodiment, the head-connecting terminal 202a to connect with the cable unit 30 is arranged at the robot-head 23 of the relative-moving robot 20a, thereby shortening the cable portion 31 of the cable unit 30 and resulting in reduction of a failure risk and cost.

### < < Fourth Embodiment> >

A cable unit 30b according to a fourth embodiment of the present invention is configured in such a way that a second connector portion 324 is connected to the back side of the first connector portion 323, which is different from the cable unit 30a according to the second embodiment. Hereinafter, differences from the second embodiment will be mainly described and common descriptions will be omitted.

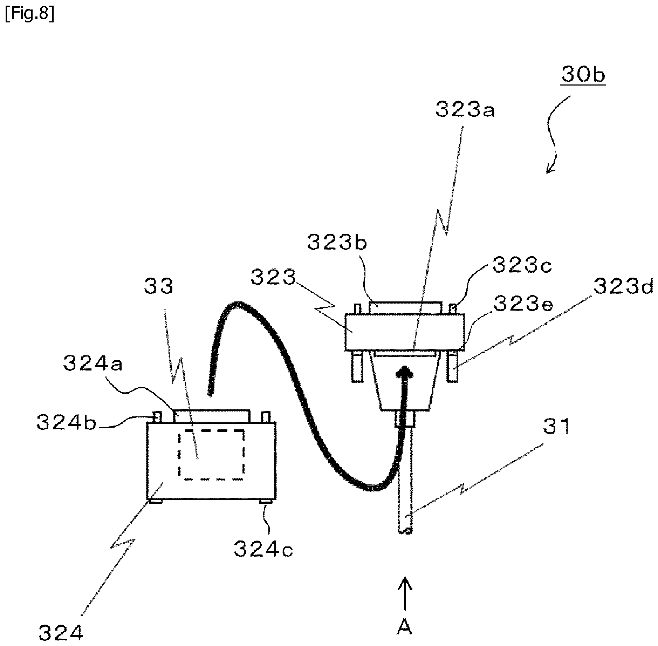

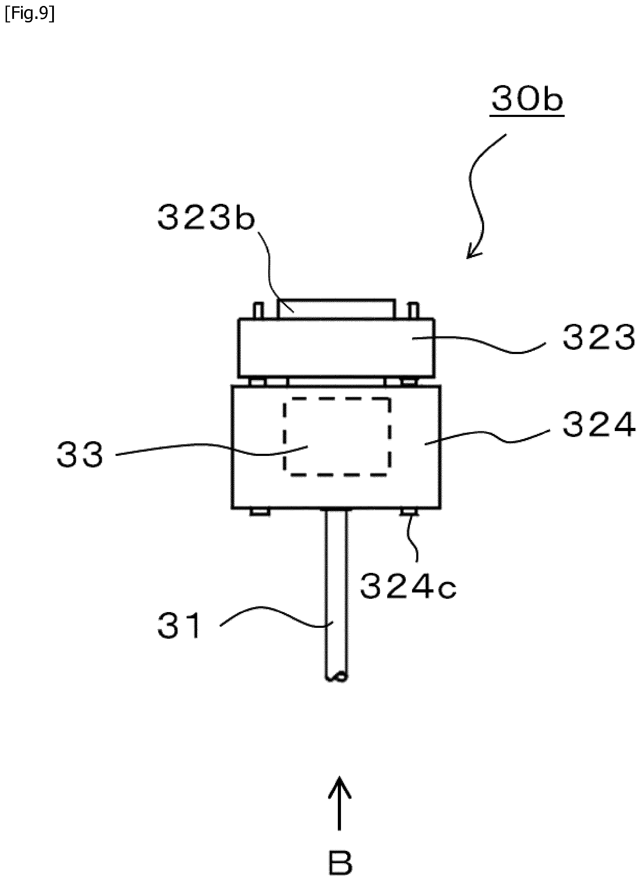

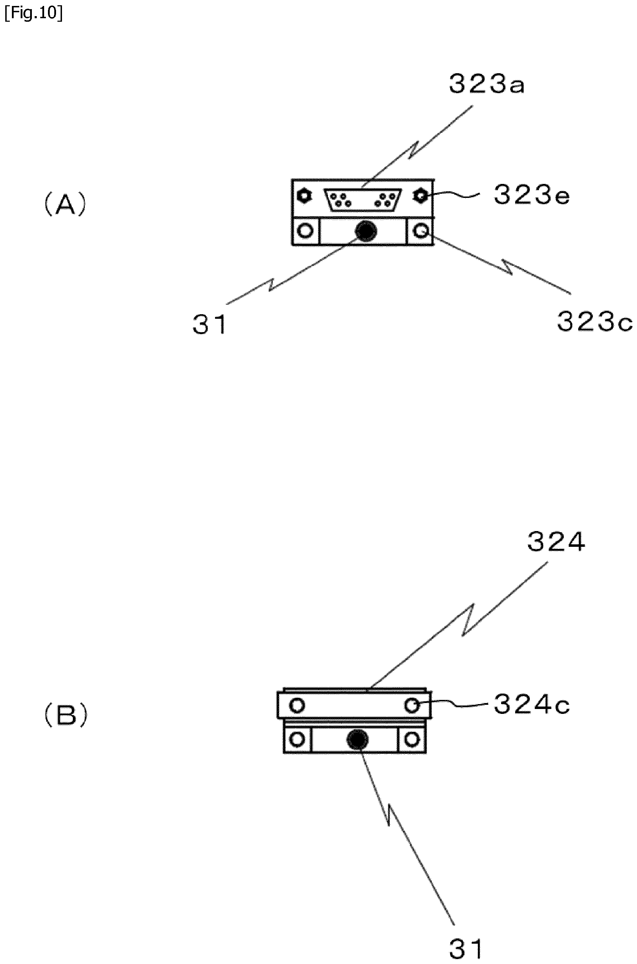

Figs. 8 and 9 are views illustrating the cable unit 30b according to the fourth embodiment. Fig. 8 shows a state where the second connector portion 324 is not connected with the first connector portion 323, and Fig. 9 shows a state where the second connector portion 324 is connected with the first connector portion 323. Fig. 10 (A) shows a view of the cable unit 30b as viewed from the A-direction in Fig. 8, and Fig. 10 (B) shows a view of the cable unit 30b as viewed from the B-direction in Fig. 9.

As shown in Figs. 8 and 9, the second connector portion 324 according to the fourth embodiment has a connector-portion-connecting terminal 324a to connect with the first connector portion 323. As in the second embodiment, the second connector portion 324 houses a dispense controller 33. As shown in Fig. 8, the first connector portion 323 according to the fourth embodiment is linked to the cable portion 31, and has a controller-connecting terminal 323a to connect with the second connector portion 324 and a robot-connecting terminal 323b to connect with the robot at one end.

When connecting the relative-moving robot 20 with the cable unit 30b, first, the controller-connecting terminal 323a of the first connector portion 323 is engaged with the connector-portion-connecting terminal 324a of the second connector portion 324. The second connector portion 324 has a pair of pins 324b and a pair of knobs 324c. Further, as shown in Fig. 10 (A), the first connector portion 323 has a pair of fasteners 323e. Thus, the pair of pins 324b of the second connector portion 324 are inserted into the threaded holes of the pair of fasteners 323e of the first connector portion 323, and then the pair of knobs 324c of the second connector portion 342 are turned. In this way, the pair of pins 324b of the second connector portion 324 can be screwed into the pair of fasteners 323e of the first connector portion 323, and the second connector portion 324 and the first connector portion 323 can be detachably coupled to each other. From another point of view, the controller-connecting terminal 323a, the connector-portion-connecting terminal 324a, the pair of pins 324b, the pair of knobs 324c, and the fasteners 323e constitute a connector coupling mechanism.

Further, the first connector portion 323 has a pair of pins 323c and a pair of knobs 323d. Then, as shown in Fig. 9, the robot-connecting terminal 323b of the first connector portion 323 is engaged with the head-connecting terminal 202 of the relative-moving robot 20 in a state where the second connector portion 324 is fixed to the first connector portion 323. Further, inserting the pair of pins 323c of the first connector portion 323 into the pair of fasteners 221 of the relative-moving robot 20, and turning the pair of knobs 323d of the first connector portion 323 causes the pair of pins 323c of the first connector portion 323 to be screwed into the pair of fasteners 221 of the relative-moving robot 20. This enables detachable coupling between the cable unit 30b and the relative-moving robot 20.

Conversely, when separating the second connector portion 324 from the first connector portion 323, the second connector portion 324 can be detached from the first connector portion 323 by just turning the pair of knobs 324c of the second connector portion 324 without uncoupling the cable unit 30b from the relative-moving robot 20.

Thus, in the cable unit 30b according to the fourth embodiment, the second connector portion 324 housing the dispense controller 33 has the connector-portion-connecting terminal 324a to connect with the first connector portion 323, and the first connector portion 323 has the controller-connecting terminal 323a to connect with the second connector portion 324 and the robot-connecting terminal 323b to connect with the robot. In this manner, when replacing the second connector portion 324, the cable unit 30b does not need to be detached from the relative-moving robot 20 and the second connector portion 324 can be replaced by just turning the pair of knobs 324c of the second connector portion 324.

The preferred embodiment examples of the present invention have been described above. However, the technical scope of the present invention is not limited to the description of the above embodiments. Various alterations and modifications can be applied to the above embodiment examples, and such altered or modified modes also fall within the technical scope of the present invention
Specifically, discharge methods to which the present invention is applicable are not limited to the screw-type method. The present invention is applicable to any type of discharge head that includes a discharge driving device that drives a discharging member disposed in a liquid chamber. For example, the present invention is applicable to: a plunger type that causes a plunger (a discharging member) to move by a desired amount to carry out discharge, the plunger sliding in close contact with the inner surface of a reservoir having a nozzle at the fore end; a valve type that controls discharge of a liquid material to which a desired pressure is applied by opening and closing a needle valve (a discharging member); a valve element seating style jet type (e.g., a jet type that causes a valve element (a discharging member) to collide against a valve seat to discharge a liquid material); and a valve element non-seating style jet type (e.g., a plunger jet type that causes a plunger (a discharging member) to move forward and then stop suddenly for applying inertial force to a liquid material to discharge the liquid material).

In the embodiment examples, configurations have been set forth where application is carried out with a workpiece placed on a work table. However, the configurations are not limitations and there may also be a configuration where application to a workpiece is carried out using a workpiece holding device that holds the workpiece by clamping a rim of the workpiece, for example. Application to a workpiece may also be carried out while the workpiece is moving or is temporarily paused using a workpiece holding device (e.g., a belt conveyer) arranged independently of the relative-moving robot. In this case, the relative-moving robot has no workpiece holding means, and moves the discharge head relative to the workpiece held by the external workpiece holding device.

### List of Reference Symbols

1, 1a application device
2 input device
3 communication cable
   10 dispense head (discharge head)
   11 main body
   12 cable-connecting terminal
   13 syringe
   14 nozzle
   15 discharge driving device
20, 20a relative-moving robot
   21 robot controller
   23 robot head
   24 work table
   25 workpiece
   26 X-driving device
   27 Y-driving device
   28 Z-driving device
   29 post
      201 table
      202, 202a head-connecting terminal
      203 input-device-connecting terminal
      204 power source device
      205 pressure-adjusting unit
      221 pair of fasteners
   30, 30a, 30b cable unit
      31 cable portion
      32 robot-side connector portion
         321, 323 first connector portion
            321a, 323a controller-connecting terminal
            323b robot-connecting terminal
            321b, 323c pair of pins
            321c, 323d pair of knobs
            323e pair of fasteners
         322, 324 second connector portion
            322a robot-connecting terminal
            322b, 324a connector-portion-connecting terminal
            322c pair of pin holes
            324a connector-portion-connecting terminal
            324b pair of pins
324c pair of knobs
   33 dispense controller
   34a robot-connecting terminal
   34b pair of pins
   34c pair of knobs
   35 discharge-head-side connector portion

## Claims

1. A cable unit (30) configured to detachably and electrically connect a discharge head (10) configured to discharge a liquid material, with a relative-moving robot (20) configured to carry out relative movement between the discharge head (10) and a workpiece (25),
**characterized in that**
the cable unit (30) comprises
a dispense controller (33) configured to control a discharge operation of the discharge head (10),
a cable portion (31), and
a connector portion (32),
wherein the dispense controller (33) is arranged at the connector portion (32), and
the connector portion (32) is constituted by a robot-side connector portion (32) and a discharge-head-side connector portion (35).

2. The cable unit (30) according to Claim 1, wherein
the cable portion (31) has a communication cable (3) for communicating with the dispense controller (33), and a power cable for supplying power to the discharge head (10).

3. The cable unit (30) according to Claim 1 or 2, wherein
the dispense controller (33) is arranged at the robot-side connector portion (32).

4. The cable unit (30) according to any of Claims 1 to 3, wherein
the connector portion (32) has a first connector portion (321) linked to the cable portion (31) and a second connector portion (322) at which the dispense controller (33) is arranged, and
the first connector portion (321) and the second connector portion (322) are able to be attached to and detached from each other.

5. The cable unit (30) according to Claim 4, wherein
the first connector portion (321) has a controller-connecting terminal (321a) to connect with the second connector portion (322), and
the second connector portion (322) has a robot-connecting terminal (322a) to connect with the relative-moving robot (20), and a connector-portion-connecting terminal (322b) to connect with the first connector portion (321).

6. The cable unit (30) according to Claim 4, wherein
the first connector portion (321) has a controller-connecting terminal (321a) to connect with the second connector portion (322), and a robot-connecting terminal (322a) to connect with the relative-moving robot (20), and
the second connector portion (322) has a connector-portion-connecting terminal (322b) to connect with the first connector portion (321).

7. The cable unit (30) according to Claim 6, wherein
the controller-connecting terminal (321a) is arranged on a surface of a side at which the cable portion (31) of the first connector portion (321) is connected, and
the robot-connecting terminal (322a) is arranged on a surface of a side opposite to the controller-connecting terminal (321a) of the first connector portion (321).

8. The cable unit (30) according to any of Claims 1 to 7, wherein the cable (30) unit has no input device.

9. The cable unit (30) according to any of Claims 1 to 8, wherein the cable unit (30) has no display device and/or no power source device.

10. The cable unit (30) according to any of Claims 1 to 9, wherein the dispense controller (33) comprises a computing device, a storage device, and an I/O port.

11. A liquid material supply device comprising:
the cable unit (30) according to any of Claims 1 to 10; and
a discharge head (10) configured to supply a liquid material.

12. An application device (1, 1a) comprising:
the liquid material supply device according to Claim 11; and
a relative-moving robot (20) configured to carry out relative movement between the discharge head (10) and a workpiece (25).

13. The application device (1, 1a) according to Claim 12, wherein
the relative-moving robot (20) comprises a robot head (23) on which the discharge head (10) is mounted, a robot head driving device (26, 27, 28) configured to move the robot head (23) relative to the workpiece (25), and a robot controller (21) configured to control an operation of the robot head (23),
the discharge head (10) comprises a discharging member of which fore end is disposed in a liquid chamber, and a discharge driving device (15) configured to drive the discharging member, and
the dispense controller (33) is configured to control an operation of the discharge driving device (15).

14. The application device (1, 1a) according to Claim 13, wherein
the relative-moving robot (20) comprises an input interface (203) configured to communicate with an external computer (2), and
the robot controller (21) has a cooperation function that enables communication between the external computer (2) and the dispense controller (33).

15. The application device (1, 1a) according to any of Claims 12 to 14, wherein
the application device (1, 1a) is of desktop type.

## Patentansprüche

1. Kabeleinheit (30), die so aufgebaut ist, dass sie einen Abgabekopf (10), der so aufgebaut ist, dass er ein Flüssigkeitsmaterial abgibt, mit einem Relativbewegungsroboter lösbar und elektrisch verbindet, der so aufgebaut ist, dass er eine Relativbewegung zwischen dem Abgabekopf (10) und einem Werkstück (25) ausführt,
**dadurch gekennzeichnet, dass**
die Kabeleinheit (30) Folgendes aufweist
eine Spendersteuereinrichtung (33), die so aufgebaut ist, dass sie einen Abgabevorgang des Abgabekopfes (10) steuert,
einen Kabelabschnitt (31), und
einen Verbindungsabschnitt (32),
wobei die Spendersteuereinrichtung (33) an dem Verbindungsabschnitt (32) angeordnet ist, und
der Verbindungsabschnitt (32) durch einen roboterseitigen Verbindungsabschnitt (32) und einen abgabekopfseitigen Verbindungsabschnitt (35) aufgebaut ist.

2. Kabeleinheit (30) gemäß Anspruch 1, wobei
der Kabelabschnitt (31) ein Verbindungskabel (3) für eine Kommunikation mit der Spendersteuereinrichtung (33) und ein Stromkabel zum Liefern von elektrischem Strom zu dem Abgabekopf (10) hat.

3. Kabeleinheit (30) gemäß Anspruch 1 oder 2, wobei
die Spendersteuereinrichtung (33) an dem roboterseitigen Verbindungsabschnitt (32) angeordnet ist.

4. Kabeleinheit (30) gemäß einem der Ansprüche 1 bis 3, wobei
der Verbindungsabschnitt (32) einen ersten Verbindungsabschnitt (321), der mit dem Kabelabschnitt (31) verbunden ist, und einen zweiten Verbindungsabschnitt (322) aufweist, an dem die Spendersteuereinrichtung (33) angeordnet ist, und
der erste Verbindungsabschnitt (321) und der zweite Verbindungsabschnitt (322) dazu in der Lage sind, dass sie aneinander angebracht werden und voneinander gelöst werden.

5. Kabeleinheit (30) gemäß Anspruch 4, wobei
der erste Verbindungsabschnitt (321) einen Steuereinrichtungsverbindungsanschluss (321a) hat zum Verbinden mit dem zweiten Verbindungsabschnitt (322), und
der zweite Verbindungsabschnitt (322) einen Roboterverbindungsanschluss (322a) zum Verbinden mit dem Relativbewegungsroboter (20) und einen Verbindungsabschnittverbindungsanschluss (322b) hat zum Verbinden mit dem ersten Verbindungsabschnitt (321).

6. Kabeleinheit (30) gemäß Anspruch 4, wobei
der erste Verbindungsabschnitt (321) einen Steuereinrichtungsverbindungsanschluss (321a) zum Verbinden mit dem zweiten Verbindungsabschnitt (322) und einen Roboterverbindungsanschluss (322a) zum Verbinden mit dem Relativbewegungsroboter (20) aufweist, und
der zweite Verbindungsabschnitt (322) einen Verbindungseinrichtungsabschnittverbindunganschluss (322b) zum Verbinden mit dem ersten Verbindungsabschnitt (321) aufweist.

7. Kabeleinheit (30) gemäß Anspruch 6, wobei
der Steuereinrichtungsverbindungsanschluss (321a) an einer Fläche einer Seite angeordnet ist, an der der Kabelabschnitt (31) des ersten Verbindungsabschnittes (321) verbunden ist, und
der Roboterverbindunganschluss (322a) an einer Fläche einer Seite angeordnet ist, die zu dem Steuereinrichtungsverbindungsanschluss (321a) des ersten Verbindungsabschnittes (321) entgegengesetzt ist.

8. Kabeleinheit (30) gemäß einem der Ansprüche 1 bis 7, wobei die Kabeleinheit (30) keine Eingabevorrichtung hat.

9. Kabeleinheit (30) gemäß einem der Ansprüche 1 bis 8, wobei die Kabeleinheit (30) keine Anzeigevorrichtung und/oder keine Energiequellenvorrichtung hat.

10. Kabeleinheit (30) gemäß einem der Ansprüche 1 bis 9, wobei die Spendersteuereinrichtung (33) eine Berechnungsvorrichtung, eine Speichervorrichtung und einen Eingabe-/Ausgabe-Port aufweist.

11. Flüssigkeitsmaterialliefervorrichtung mit:
der Kabeleinheit (30) gemäß einem der Ansprüche 1 bis 10; und
einem Abgabekopf (10), der so aufgebaut ist, dass er ein Flüssigkeitsmaterial liefert.

12. Applikationsvorrichtung (1, 1a) mit:
einer Flüssigkeitsmaterialliefervorrichtung gemäß Anspruch 11; und
einem Relativbewegungsroboter (20), der so aufgebaut ist, dass er eine Relativbewegung zwischen dem Abgabekopf (10) und einem Werkstück (25) ausführt.

13. Applikationsvorrichtung (1, 1a) gemäß Anspruch 12, wobei
der Relativbewegungsroboter (20) einen Roboterkopf (23), an dem der Abgabekopf (10) montiert ist, eine Roboterkopfantriebsvorrichtung (26, 27, 28), die so aufgebaut ist, dass sie den Roboterkopf (23) relativ zu dem Werkstück (25) bewegt, und eine Robotersteuereinrichtung (21) aufweist, die so aufgebaut ist, dass sie einen Betrieb des Roboterkopfes (23) steuert,
der Abgabekopf (10) ein Abgabeelement, dessen vorderes Ende in einer Flüssigkeitskammer angeordnet ist, und eine Abgabeantriebsvorrichtung (15) aufweist, die so aufgebaut ist, dass sie das Abgabeelement antreibt, und
die Spendersteuereinrichtung (33) so aufgebaut ist, dass sie einen Betrieb der Abgabeantriebsvorrichtung (15) steuert.

14. Applikationsvorrichtung (1, 1a) gemäß Anspruch 13, wobei
der Relativbewegungsroboter (20) eine Eingabeschnittstelle (203) aufweist, die so aufgebaut ist, dass sie mit einem externen Computer (2) in Kommunikation steht, und
die Robotersteuereinrichtung (21) eine Zusammenarbeitsfunktion hat, die eine Kommunikation zwischen dem externen Computer (2) und der Spendersteuereinrichtung (33) ermöglicht.

15. Applikationsvorrichtung (1, 1a) gemäß einem der Ansprüche 12 bis 14, wobei
die Applikationsvorrichtung (1, 1a) von der Desktopart ist.

## Revendications

1. Unité de câble (30) configurée pour connecter électriquement et de manière détachable une tête de décharge (10) configurée pour décharger un matériau liquide à un robot à mouvement relatif (20) configuré pour effectuer un mouvement relatif entre la tête de décharge (10) et une pièce à usiner (25),
**caractérisé en ce que**
l'unité de câble (30) comprend
un contrôleur de distribution (33) configuré pour commander une opération de décharge de la tête de décharge (10),
une partie de câble (31), et
une partie de connecteur (32),
dans lequel le contrôleur de distribution (33) est disposé à la partie de connecteur (32), et
la partie de connecteur (32) est constituée d'une partie de connecteur côté robot (32) et d'une partie de connecteur côté tête de décharge (35).

2. Unité de câble (30) selon la revendication 1, dans laquelle
la partie de câble (31) a un câble de communication (3) pour communiquer avec le contrôleur de distribution (33), et un câble d'alimentation pour alimenter la tête de décharge (10).

3. Unité de câble (30) selon la revendication 1 ou 2, dans laquelle
le contrôleur de distribution (33) est disposé à la partie de connecteur côté robot (32).

4. Unité de câble (30) selon l'une des revendications 1 à 3, dans laquelle
la partie de connecteur (32) a une première partie de connecteur (321) reliée à la partie de câble (31) et a une deuxième partie de connecteur (322) à laquelle le contrôleur de distribution (33) est disposé, et
la première partie de connecteur (321) et la deuxième partie du connecteur (322) peuvent être attachées et détachées l'une de l'autre.

5. Unité de câble (30) selon la revendication 4, dans laquelle
la première partie de connecteur (321) a une borne de connexion au contrôleur (321a) pour se connecter à la deuxième partie de connecteur (322), et
la deuxième partie de connecteur (322) a une borne de connexion au robot (322a) pour se connecter au robot à mouvement relatif (20), et une borne de connexion à la partie de connecteur (322b) pour se connecter à la première partie de connecteur (321).

6. Unité de câble (30) selon la revendication 4, dans laquelle
la première partie de connecteur (321) a une borne de connexion au contrôleur (321a) pour se connecter à la deuxième partie de connecteur (322), et une borne de connexion au robot (322a) pour se connecter au robot à mouvement relatif (20), et
la deuxième partie de connecteur (322) a une borne de connexion à la partie de connecteur (322b) pour se connecter à la première partie de connecteur (321).

7. Unité de câble (30) selon la revendication 6, dans laquelle
la borne de connexion au contrôleur (321a) est disposée sur une surface d'un côté où la partie de câble (31) de la première partie de connecteur (321) est connectée, et
la borne de connexion au robot (322a) est disposée sur une surface d'un côté opposé à la borne de connexion au contrôleur (321a) de la première partie de connecteur (321).

8. Unité de câble (30) selon l'une des revendications 1 à 7, dans laquelle l'unité de câble (30) n'a pas de dispositif d'entrée.

9. Unité de câble (30) selon l'une des revendications 1 à 8, dans laquelle l'unité de câble (30) n'a pas de dispositif d'affichage et/ou de source d'alimentation.

10. Unité de câble (30) selon l'une des revendications 1 à 9, dans laquelle le contrôleur de distribution (33) comprend un dispositif informatique, un dispositif de stockage et un port d'entrée/sortie.

11. Dispositif d'alimentation en matériau liquide comprenant :
l'unité de câble (30) selon l'une des revendications 1 à 10; et
une tête de décharge (10) configurée pour alimenter un matériau liquide.

12. Dispositif d'application (1, 1a) comprenant :
le dispositif d'alimentation en matériau liquide selon la revendication 11 ; et
un robot à mouvement relatif (20) configuré pour effectuer un mouvement relatif entre la tête de décharge (10) et une pièce à usiner (25).

13. Dispositif d'application (1, 1a) selon la revendication 12, dans lequel
le robot à mouvement relatif (20) comprend une tête de robot (23) sur laquelle la tête de décharge (10) est montée, un dispositif d'entraînement de tête de robot (26, 27, 28) configuré pour déplacer la tête de robot (23) par rapport à la pièce à usiner (25), et un contrôleur de robot (21) configuré pour commander le fonctionnement de la tête de robot (23),
la tête de décharge (10) comprend un élément de décharge dont l'extrémité avant est disposée dans une chambre à liquide, et un dispositif d'entraînement de décharge (15) configuré pour entraîner l'élément de décharge, et
le contrôleur de distribution (33) est configuré pour commander le fonctionnement du dispositif d'entraînement de décharge (15).

14. Dispositif d'application (1, 1a) selon la revendication 13, dans lequel
le robot à mouvement relatif (20) comprend une interface d'entrée (203) configurée pour communiquer avec un ordinateur externe (2), et
le contrôleur de robot (21) a une fonction de coopération qui permet la communication entre l'ordinateur externe (2) et le contrôleur de distribution (33).

15. Dispositif d'application (1, 1a) selon l'une des revendications 12 à 14, dans lequel
le dispositif d'application (1, 1a) est de type de bureau.
